# EUROPEAN PATENT APPLICATION

(11) **EP 4 258 795 A1**
(43) Date of publication of application: **11.10.2023**
(21) Application number: 21914465.6
(22) Date of filing: 29.12.2021
(51) Int. Cl.: H04W 74/08

(54) **COMMUNICATION METHOD, APPARATUS, AND COMPUTER READABLE STORAGE MEDIUM**

(30) Priority: 31.12.2020 CN 202011635867
(71) Applicant: Huawei Technologies Co., Ltd., Shenzhen, Guangdong 518129 (CN)
(72) Inventor: GUO, Yuchen, Shenzhen, Guangdong 518129 (CN); LI, Yunbo, Shenzhen, Guangdong 518129 (CN); GAN, Ming, Shenzhen, Guangdong 518129 (CN)
(74) Representative: Goddar, Heinz J.
(86) International application number: PCT/CN2021/142348
(87) International publication number: WO 2022/143733

(57) **Abstract**

Embodiments of this application relate to the communication field, and provide a communication method and apparatus, and a computer-readable storage medium. The method in embodiments of this application includes: If a first condition is met, a station STA determines that a restricted service period ends, where the first condition includes any one or more of the following: receiving a first frame, where the first frame indicates that the restricted service period ends; receiving no second frame in a preset time period; and receiving a frame for non-low-latency service communication in a local cell, where the local cell is a basic service set BSS to which the STA belongs. According to embodiments of this application, communication resources can be saved during Communication in an R-TWT SP.

## Description

This application claims priority to Chinese Patent Application No. 202011635867.6, filed with the China National Intellectual Property Administration on December 31, 2020 and entitled "COMMUNICATION METHOD AND APPARATUS, AND COMPUTER-READABLE STORAGE MEDIUM", which is incorporated herein by reference in its entirety.

### TECHNICAL FIELD

This application relates to the field of wireless communication technologies, and in particular, to a communication method and apparatus, and a computer-readable storage medium.

### BACKGROUND

A target wake time (target wake time, TWT) is an energy saving technology defined by Wi-Fi 6, and means that a station (station, STA) and an access point (access point, AP) may agree on a service time (service period, SP), and keep in an active state and perform communication in the service time, so that the station and the access point can keep sleep in a time other than the service time, to save energy. The TWT may be classified into an individual (individual) TWT and a broadcast (broadcast) TWT according to different methods for agreeing on the service time.

A restricted TWT SP (restricted TWT, R-TWT) is used to serve only a low-latency service, and a non-low-latency service cannot be communicated in this period. When a length of the R-TWT SP exceeds a time length required for actual communication of the current low-latency service, an R-TWT SP after the current low-latency communication ends is wasted. As a result, communication resources are wasted.

### SUMMARY

Embodiments of this application provide a communication method and apparatus, and a computer-readable storage medium, to save communication resources during Communication in an R-TWT SP.

According to a first aspect, an embodiment of this application provides a communication method. The method includes: If a first condition is met, a STA determines that a restricted service period ends, where the first condition includes any one or more of the following: receiving a first frame, where the first frame indicates that the restricted service period ends; receiving no second frame in a preset time period; and receiving a frame for non-low-latency service communication in a local cell, where the local cell is a basic service set (basic service set, BSS) to which the STA belongs.

In the solution provided in this application, for the restricted service period, the STA may end the restricted service period in advance when the first condition is met. Because the STA can perform only communication of a low-latency service in the restricted service period, when any one or more conditions in the first condition are met, the STA determines that the restricted service period ends, and ends the restricted service period in advance. In this way, waste of a remaining idle restricted service time after the low-latency service is completed can be avoided, thereby saving communication resources.

It may be understood that the restricted service period is a period of time, and the AP and the STA are only used to serve the low-latency service in this period of time. Optionally, the restricted service period may be referred to as an R-SP (restricted service period, R-SP), or may be referred to as a restricted TWT SP (restricted TWT SP). It may be understood that the restricted service period may alternatively have another name. This is not limited in this embodiment of this application.

With reference to the first aspect, in a possible implementation, the first frame is an extremely high throughput (extremely high throughput, EHT) action frame, and an EHT action field in the EHT action frame indicates that the restricted service period ends.

In the solution provided in this application, the first frame may be the EHT action frame, or may be a CF-end frame, or may be another frame.

With reference to the first aspect, in a possible implementation, when the first condition includes: receiving no second frame in the preset time period, before that a STA determines that a restricted service period ends, the communication method further includes: The STA receives a third frame, where the third frame carries a TWT element; and the preset time period is determined by a nominal minimum TWT wake duration field and a wake duration unit field in the TWT element.

In the solution provided in this application, the preset time period may be obtained by the STA by receiving the third frame, or may be specified in a standard.

With reference to the first aspect, in a possible implementation, when the first condition includes: receiving the frame for non-low-latency service communication in the local cell, before that a STA determines that a restricted service period ends, the communication method further includes: The STA receives a fourth frame, where the fourth frame carries a TWT element. The TWT element carries a threshold access class (access category, AC) of a non-low-latency service or a preset service identifier (traffic identifier, TID) of a non-low-latency service, and the non-low-latency service is a service whose access class of the service is lower than or equal to the threshold access class of the non-low-latency service; or the non-low-latency service is a service whose service identifier is the preset service identifier of the non-low-latency service.

In the solution provided in this application, to meet the condition of receiving the frame for non-low-latency service communication in the local cell, the STA needs to obtain the threshold access class of the non-low-latency service or the preset service identifier of the non-low-latency service. It may be determined whether the currently received service is the non-low-latency service, to determine whether the condition of receiving the frame for non-low-latency service communication in the local cell is met. If the condition is met, it may be determined that the restricted service period ends.

With reference to the first aspect, in a possible implementation, the threshold access class of the non-low-latency service or the preset service identifier of the non-low-latency service is determined by using a broadcast TWT recommendation field in the TWT element.

In the solution provided in this application, the threshold access class of the non-low-latency service or the preset service identifier of the non-low-latency service may be carried in the TWT element. There is no need to set a new element dedicated to carrying the threshold access class of the non-low-latency service or the preset service identifier of the non-low-latency service, to save communication resources.

With reference to the first aspect, in a possible implementation, the communication method further includes: The STA initiates new channel access after determining that the restricted service period ends, or continues to perform channel access that is suspended before the restricted service period.

In the solution provided in this application, when determining that the restricted service period ends and ending the restricted service period in advance, the STA may continue to perform channel access, to minimize waste of an idle communication time.

According to a second aspect, an embodiment of this application provides a communication method, to ensure that ongoing transmission of the low-latency service is not interrupted during Communication in an R-TWT SP. The communication method includes: The STA obtains a transmit opportunity (transmit opportunity, TXOP) before a restricted service period arrives; and if a second condition is met, the STA skips ending the TXOP before the restricted service period arrives, where the second condition includes any one or more of the following: the TXOP is used to transmit a data frame of a first service; a transmission time for transmitting a service in the TXOP is less than or equal to a first threshold; and the restricted service period is a time period used for device to device (device to device, D2D) transmission.

In the solution provided in this application, because the STA needs to end its TXOP before the restricted service period arrives, if any one or more of exception conditions (the second condition) are met, the STA may not need to end its transmit opportunity before the restricted service period arrives. In this way, ongoing transmission of the low-latency service is not interrupted, thereby ensuring latency performance of the low-latency service of the STA.

The STA skips ending the TXOP before the restricted service period arrives, which may be understood as that the STA does not end the TXOP before the restricted service period arrives. It may also be understood that the STA continues the current service transmission when the restricted service period arrives.

With reference to the second aspect, in a possible implementation, when the second condition includes that the transmission time for transmitting the service in the TXOP is less than or equal to the first threshold, before that the STA skips ending the TXOP before the restricted service period arrives, the communication method further includes: The STA receives a fifth frame, where the fifth frame carries a TWT element, and the TWT element carries the first threshold.

In the solution provided in this application, before the condition that the transmission time for transmitting the service in the TXOP is less than or equal to the first threshold is met, the STA needs to obtain information about the first threshold. The information about the first threshold may be obtained by the STA by receiving the TWT element carried in the fifth frame, or may be specified in a standard.

With reference to the second aspect, in a possible implementation, the first device is the low-latency service. When the second condition includes that the TXOP is used to transmit the data frame of the first service, before that the STA skips ending the TXOP before the restricted service period arrives, the communication method further includes: The STA receives a sixth frame, where the sixth frame carries a TWT element. The TWT element carries a threshold access class of a low-latency service or a preset service identifier of a low-latency service, and the low-latency service is a service whose access class of the service is higher than or equal to the threshold access class of the low-latency service; or the low-latency service is a service whose service identifier is the preset service identifier of the low-latency service.

In the solution provided in this application, the first service may be the low-latency service. To meet the condition that the TXOP is used to transmit the data frame of the first service, the STA needs to obtain the threshold access class of the low-latency service or the preset service identifier of the low-latency service. It may be determined whether the currently received service is the low-latency service, to determine whether the condition that the TXOP is used to transmit the data frame of the first service is met. When the condition is met, the STA may not need to end its transmit opportunity before the restricted service period arrives. In this way, ongoing transmission of the low-latency service is not interrupted, thereby ensuring latency performance of the low-latency service of the STA.

With reference to the second aspect, in a possible implementation, the threshold access class of the low-latency service or the preset service identifier of the low-latency service is determined by using a broadcast TWT recommendation field in the TWT element.

In the solution provided in this application, the threshold access class of the low-latency service or the preset service identifier of the low-latency service may be carried in the TWT element. There is no need to set a new element dedicated to carrying the threshold access class of the low-latency service or the preset service identifier of the low-latency service, to save communication resources.

With reference to the second aspect, in a possible implementation, the first service is an exception service. When the second condition includes that the TXOP is used to transmit the data frame of the first service, before that the STA skips ending the TXOP before the restricted service period arrives, the communication method further includes: The STA receives a seventh frame, where the seventh frame carries a TWT element. The TWT element carries a threshold access class of the exception service or a preset service identifier of the exception service, and the exception service is a service whose access class of the service is higher than or equal to the threshold access class of the exception service; or the exception service is a service whose service identifier is the preset service identifier of the exception service.

In the solution provided in this application, the first service may be the exception service. To meet the condition that the TXOP is used to transmit the data frame of the first service, the STA needs to obtain the threshold access class of the exception service or the preset service identifier of the exception service. It may be determined whether the currently received service is the exception service, to determine whether the condition that the TXOP is used to transmit the data frame of the first service is met. When the condition is met, the STA may not need to end its transmit opportunity before the restricted service period arrives. In this way, ongoing transmission of the service is not interrupted, thereby ensuring latency performance of the service of the STA.

With reference to the second aspect, in a possible implementation, the threshold access class of the exception service or the preset service identifier of the exception service is determined by an exception access class field in the TWT element.

In the solution provided in this application, the threshold access class of the exception service or the preset service identifier of the exception service may be carried in the TWT element. There is no need to set a new element dedicated to carrying the threshold access class of the exception service or the preset service identifier of the exception service, to save communication resources.

With reference to the second aspect, in a possible implementation, the communication method further includes: When the restricted service period arrives, when the transmission time for transmitting the service in the TXOP is greater than a second threshold, the STA ends the TXOP.

In the solution provided in this application, when the restricted service period arrives, in a possible implementation, the STA may continue transmission only for a period of time, but cannot exceed the second threshold. The second threshold may be a value specified in a standard, or may be sent by the AP to the STA, for example, carried in the TWT element for sending. In this way, impact on the restricted service period can be reduced.

It may be understood that the second threshold may be equal to the first threshold, that is, the STA ends the TXOP only after transmission of the current service of the TXOP is completed.

With reference to the second aspect, in a possible implementation, the communication method further includes: When the restricted service period arrives, the STA continues to transmit at most one physical layer protocol data unit (presentation protocol data unit, PPDU) in the TXOP.

In the solution provided in this application, when the restricted service period arrives, in another possible implementation, when continuing transmission in the TXOP, the STA can transmit only one PPDU. In this way, impact on the restricted service period can be reduced.

With reference to the second aspect, in a possible implementation, the communication method further includes: The STA receives an eighth frame, where the eighth frame indicates to extend the restricted service period.

In the solution provided in this application, when the restricted service period arrives, in still another possible implementation, the STA may receive a frame indicating to extend the restricted service period. After the current transmission is complete, transmission in the restricted service period starts. The extending duration of the restricted service period can reduce impact on service transmission in the restricted service period.

According to a third aspect, an embodiment of this application provides a first communication apparatus, where the first communication apparatus may be applied to a STA and includes:
a processing unit, configured to: if a first condition is met, determine that a restricted service period ends, where the first condition includes any one or more of the following:
receiving a first frame, where the first frame indicates that the restricted service period ends;
receiving no second frame in a preset time period; and
receiving a frame for non-low-latency service communication in a local cell, where the local cell is a BSS to which the STA belongs.

With reference to the third aspect, in a possible implementation, the first frame is an EHT action frame, and an EHT action field in the EHT action frame indicates that the restricted service period ends.

With reference to the third aspect, in a possible implementation, the first communication apparatus further includes:
a transceiver unit, configured to: when the first condition includes receiving no second frame in the preset time period, receive a third frame before the STA determines that the restricted service period ends, , where the third frame carries a TWT element; and the preset time period is determined by a nominal minimum TWT wake duration field and a wake duration unit field in the TWT element.

With reference to the third aspect, in a possible implementation, the transceiver unit may be further configured to: when the first condition includes: receiving the frame for non-low-latency service communication in the local cell, receive a fourth frame before the STA determines that the restricted service period ends, where the fourth frame carries a TWT element; and
the TWT element carries a threshold access class of a non-low-latency service or a preset service identifier of a non-low-latency service, and the non-low-latency service is a service whose access class of the service is lower than or equal to the threshold access class of the non-low-latency service; or the non-low-latency service is a service whose service identifier is the preset service identifier of the non-low-latency service.

With reference to the third aspect, in a possible implementation, the threshold access class of the non-low-latency service or the preset service identifier of the non-low-latency service is determined by using a broadcast TWT recommendation field in the TWT element.

With reference to the third aspect, in a possible implementation, the processing unit may be further configured to: initiate new channel access after determining that the restricted service period ends, or continue to perform channel access that is suspended before the restricted service period.

According to a fourth aspect, an embodiment of this application provides a second communication apparatus, where the second communication apparatus may be applied to a STA and includes:
a processing unit, configured to obtain a TXOP before a restricted service period arrives.

The processing unit is further configured to: if a second condition is met, skip ending the TXOP before the restricted service period arrives, where the second condition includes any one or more of the following:
the TXOP is used to transmit a data frame of a first service;
a transmission time for transmitting a service in the TXOP is less than or equal to a first threshold; and
the restricted service period is a time period used for D2D transmission.

With reference to the fourth aspect, in a possible implementation, the second communication apparatus further includes:
a transceiver unit, configured to: when the second condition includes that the transmission time for transmitting the service in the TXOP is less than or equal to the first threshold, before the skipping ending the TXOP before the restricted service period arrives, receive a fifth frame, where the fifth frame carries a TWT element, and the TWT element carries the first threshold.

With reference to the fourth aspect, in a possible implementation, the first service is the low-latency service, and the transceiver unit may be further configured to:
when the second condition includes that the TXOP is used to transmit the data frame of the first service, before the skipping ending the TXOP before the restricted service period arrives, receive a sixth frame, where the sixth frame carries a TWT element. The TWT element carries a threshold access class of a low-latency service or a preset service identifier of a low-latency service, and the low-latency service is a service whose access class of the service is higher than or equal to the threshold access class of the low-latency service; or the low-latency service is a service whose service identifier is the preset service identifier of the low-latency service.

With reference to the fourth aspect, in a possible implementation, the threshold access class of the low-latency service or the preset service identifier of the low-latency service is determined by using a broadcast TWT recommendation field in the TWT element.

With reference to the fourth aspect, in a possible implementation, the first service is an exception service, and the transceiver unit is further configured to:
when the second condition includes that the TXOP is used to transmit the data frame of the first service, before the skipping ending the TXOP before the restricted service period arrives, receive a seventh frame, where the seventh frame carries a TWT element. The TWT element carries a threshold access class of the exception service or a preset service identifier of the exception service, and the exception service is a service whose access class of the service is higher than or equal to the threshold access class of the exception service; or the exception service is a service whose service identifier is the preset service identifier of the exception service.

With reference to the fourth aspect, in a possible implementation, the threshold access class of the exception service or the preset service identifier of the exception service is determined by an exception access class field in the TWT element.

With reference to the fourth aspect, in a possible implementation, the processing unit may be further configured to:
when the restricted service period arrives, when the transmission time for transmitting the service in the TXOP is greater than a second threshold, end the TXOP.

With reference to the fourth aspect, in a possible implementation, the processing unit may be further configured to:
when the restricted service period arrives, at most one PPDU continues to be transmitted in the TXOP.

With reference to the fourth aspect, in a possible implementation, the transceiver unit may be further configured to:
receive an eighth frame, where the eighth frame indicates to extend the restricted service period.

According to a fifth aspect, an embodiment of this application provides a first communication apparatus, where the first communication apparatus may be applied to a STA and includes a processor. Optionally, the first communication apparatus further includes a transceiver that communicates with the processor. The processor is configured to: if a first condition is met, determine that a restricted service period ends, where the first condition includes any one or more of the following:
receiving a first frame, where the first frame indicates that the restricted service period ends;
receiving no second frame in a preset time period; and
receiving a frame for non-low-latency service communication in a local cell, where the local cell is a BSS to which the STA belongs.

The first communication apparatus provided in the fifth aspect is configured to perform the first aspect or any possible implementation of the first aspect. For specific details, refer to the first aspect or any possible implementation of the first aspect. Details are not described herein again.

According to a sixth aspect, an embodiment of this application provides a second communication apparatus, where the second communication apparatus may be applied to a STA and includes a processor. Optionally, the second communication apparatus further includes a transceiver that communicates with the processor. The processor is configured to obtain a TXOP before a restricted service period arrives.

The processor is further configured to: if a second condition is met, skip ending the TXOP before the restricted service period arrives, where the second condition includes any one or more of the following:
the TXOP is used to transmit a data frame of a first service;
a transmission time for transmitting a service in the TXOP is less than or equal to a first threshold; and
the restricted service period is a time period used for D2D transmission.

The second communication apparatus provided in the sixth aspect is configured to perform the second aspect or any possible implementation of the second aspect. For specific details, refer to the second aspect or any possible implementation of the second aspect. Details are not described herein again.

According to a seventh aspect, an embodiment of this application provides a first communication apparatus, where the first communication apparatus may be applied to a STA and includes a processing circuit. Optionally, the first communication apparatus further includes an output interface for internal communication with the processing circuit. The processing circuit is configured to: if a first condition is met, determine that a restricted service period ends, where the first condition includes any one or more of the following:
receiving a first frame, where the first frame indicates that the restricted service period ends;
receiving no second frame in a preset time period; and
receiving a frame for non-low-latency service communication in a local cell, where the local cell is a BSS to which the STA belongs.

The first communication apparatus provided in the seventh aspect is configured to perform the first aspect or any possible implementation of the first aspect. For specific details, refer to the first aspect or any possible implementation of the first aspect. Details are not described herein again.

According to an eighth aspect, an embodiment of this application provides a second communication apparatus, where the second communication apparatus may be applied to a STA and includes a processing circuit. Optionally, the second communication apparatus further includes an output interface for internal communication with the processing circuit. The processing circuit is configured to obtain a TXOP before a restricted service period arrives.

The processing circuit is further configured to: if a second condition is met, skip ending the TXOP before the restricted service period arrives, where the second condition includes any one or more of the following:
the TXOP is used to transmit a data frame of a first service;
a transmission time for transmitting a service in the TXOP is less than or equal to a first threshold; and
the restricted service period is a time period used for D2D transmission.

The second communication apparatus provided in the eighth aspect is configured to perform the second aspect or any possible implementation of the second aspect. For specific details, refer to the second aspect or any possible implementation of the second aspect. Details are not described herein again.

According to a ninth aspect, an embodiment of this application provides a computer-readable storage medium. The computer-readable storage medium stores instructions. When the instructions are run on a computer, the computer is enabled to perform the method according to the first aspect or any possible implementation of the first aspect.

According to a tenth aspect, an embodiment of this application provides a computer-readable storage medium. The computer-readable storage medium stores instructions. When the instructions are run on a computer, the computer is enabled to perform the method according to the second aspect or any possible implementation of the second aspect.

According to an eleventh aspect, an embodiment of this application provides a computer program product including program instructions. When the computer program product is run on a computer, the computer is enabled to perform the method according to the first aspect or any possible implementation of the first aspect.

According to a twelfth aspect, an embodiment of this application provides a computer program product including program instructions. When the computer program product is run on a computer, the computer is enabled to perform the method according to the second aspect or any possible implementation of the second aspect.

According to a thirteenth aspect, an embodiment of this application provides a communication system. The communication system includes the first communication apparatus provided in the third aspect, the fifth aspect, or the seventh aspect, and the second communication apparatus provided in the fourth aspect, the sixth aspect, or the eighth aspect.

### BRIEF DESCRIPTION OF DRAWINGS

FIG. 1 is a schematic diagram of an implementation of a TWT service period in the conventional technology;
FIG. 2 is a schematic diagram of a communication system according to an embodiment of this application;
FIG. 3 is a schematic flowchart of a communication method according to an embodiment of this application;
FIG. 4 is a schematic diagram of a frame structure according to an embodiment of this application;
FIG. 5A is a schematic diagram of a frame structure of a TWT element according to an embodiment of this application;
FIG. 5B is a schematic diagram of a frame structure of an EHT operation element according to an embodiment of this application;
FIG. 6A is a schematic diagram of a frame structure of another TWT element according to an embodiment of this application;
FIG. 6B is a schematic diagram of a frame structure of another EHT operation element according to an embodiment of this application;
FIG. 7 is a schematic diagram of a frame structure of still another TWT element according to an embodiment of this application;
FIG. 8 is a schematic flowchart of another communication method according to an embodiment of this application;
FIG. 9A is a schematic diagram of a frame structure of yet another TWT element according to an embodiment of this application;
FIG. 9B is a schematic diagram of a frame structure of still another EHT operation element according to an embodiment of this application;
FIG. 10 is a schematic diagram of another frame structure according to an embodiment of this application;
FIG. 11 is a schematic diagram of a structure of a first communication apparatus according to an embodiment of this application; and
FIG. 12 is a schematic diagram of a structure of a second communication apparatus according to an embodiment of this application.

### DESCRIPTION OF EMBODIMENTS

The following clearly and completely describes the technical solutions in embodiments of this application with reference to the accompanying drawings in embodiments of this application.

For ease of understanding this application, related technical knowledge included in embodiments of this application is described herein first.

### 1. TWT

The TWT is a technology defined by Wi-Fi 6 for energy saving. A core idea is to set some periodic time periods, so that some devices need only to keep in an active state in these TWT service periods (service period, TWT SP), and may keep sleep in another time, to save energy.

The TWT is classified into an individual TWT (individual TWT) and a broadcast TWT (broadcast TWT). In the individual TWT, each STA may independently establish a TWT agreement with an AP. Therefore, each STA may have its own active time period and sleep time period. In the broadcast TWT, the AP may establish a common TWT agreement for a group of STAs, and a plurality of STAs operate in a same active time period, and keep sleep in another time period.

### The individual TWT:

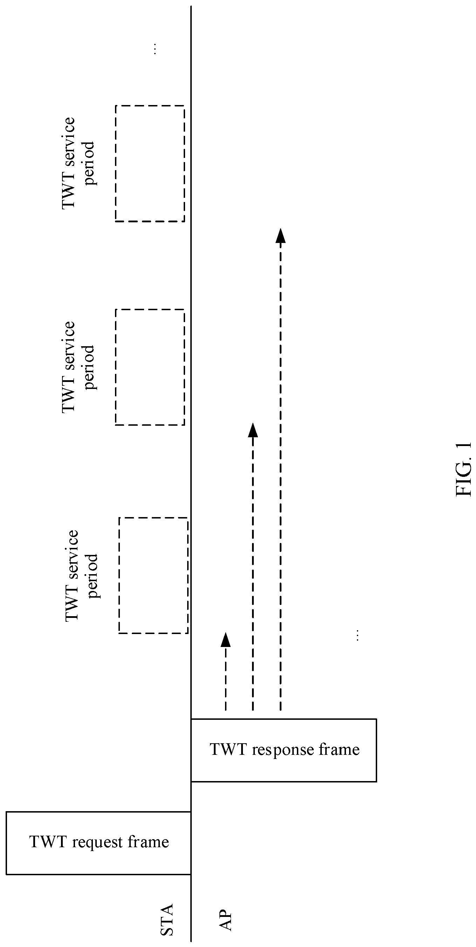

The individual TWT means that a TWT request station (requesting) sends a TWT request message to a TWT response station (responding) to request to set a wake time. After receiving the TWT request message, the response station sends the TWT response message to the request station. After the interaction succeeds, a TWT agreement is established between the request station and the response station. After the TWT agreement is reached, both the request station and the response station should keep in an active state in an agreed-on time period, to send and receive data. Outside the time period, the station may keep sleep to save energy. Generally, the STA sends a TWT agreement establishment request to the AP, that is, the STA is the request station, and the AP is the response station. Certainly, the AP may alternatively initiate a TWT agreement establishment request to the station. After the TWT agreement is established, the agreed-on active time period is referred to as a TWT service period. FIG. 1 is a schematic diagram of an implementation of a TWT service period in the conventional technology. As shown in FIG. 1, a STA sends a TWT request frame to an AP to request a TWT agreement, and the AP sends a TWT response frame to the STA. Each TWT agreement may include a plurality of periodic TWT service periods with the same duration.

### The broadcast TWT:

Different from the individual TWT, the broadcast TWT provides a "batch management" mechanism. The AP can establish a series of periodic TWT service periods with a plurality of STAs. In the TWT service periods, the plurality of STAs need to keep in an active state, to communicate with the AP.

The AP may carry information about one or more broadcast TWTs in a beacon frame (beacon frame), and each broadcast TWT is jointly represented by a broadcast TWT identifier and a medium access control (media access control, MAC) address of the AP. After receiving the beacon frame, if the STA intends to join the broadcast TWT, the STA may send a broadcast TWT establishment request message to the AP, to join the broadcast TWT. During establishment of the broadcast TWT, the STA needs to specify a broadcast TWT identifier to request to join a specific broadcast TWT. After joining the broadcast TWT, the STA may be woken up based on a service period indicated by a TWT parameter set, to communicate with the AP. It should be noted that, if the STA supports the broadcast TWT but does not explicitly join a broadcast TWT ID, the STA participates in a broadcast TWT whose broadcast TWT ID = 0 by default.

Similar to the individual TWT, the broadcast TWT parameter set also specifies a period at which the TWT service period appears and duration of each TWT service period. In addition, broadcast TWT parameters further include a lifecycle of the broadcast TWT. The lifecycle of the broadcast TWT is counted by using a beacon frame interval as a unit, and indicates duration of an established broadcast TWT.

### 2. Low-latency communication

With development of a wireless network and continuous upgrade of a wireless local area network (wireless local area network, WLAN) technology, increasingly more application traffic is carried by Wi-Fi. In addition, emerging mobile applications have increasingly high requirements on WLAN latency performance. For example, applications such as wireless video, voice, game, and augmented reality (augmented reality, AR)/virtual reality (virtual reality, VR) each have a high requirement on a communication latency.

To meet different types of traffic requirements, the WLAN needs to prioritize different services. For example, in a WLAN channel contention access process, each device has four different access categories, and transmission priority division is implemented by using different contention parameters. Each access class may include two service identifiers, to correspond to two different services. Generally, a data packet of a low-latency service is periodically generated.

A restricted TWT service period (restricted TWT SP, R-TWT-SP) is only used to serve the low-latency service, and another service cannot communicate in this period. In addition, if the STA has started communication before the R-TWT-SP, the current communication needs to be ended before the R-TWT-SP starts.

Technical defects of this mechanism include the following two aspects:
1. A length of the R-TWT-SP may exceed a time length required for actual communication of the low-latency service. However, according to regulations, no other communication is allowed in the R-TWT-SP, and therefore an R-TWT-SP time after the low-latency communication ends is wasted.
2. Before the R-TWT-SP arrives, ongoing communication of the STA may also be communication of the low-latency service. However, according to regulations, the STA needs to end its transmit opportunity (transmit opportunity, TXOP) before the R-TWT-SP arrives. This affects latency performance of the low-latency service of the STA.

Based on the problem that the R-TWT-SP time after the low-latency communication ends is wasted, an embodiment of this application provides a communication method, to save communication resources during Communication in an R-TWT SP. The communication method is specifically: if a first condition is met, the STA determines that a restricted service period ends, where the first condition includes any one or more of the following: receiving a first frame, where the first frame indicates that the restricted service period ends; receiving no second frame in a preset time period; and receiving a frame for non-low-latency service communication in a local cell, where the local cell is a BSS to which the STA belongs. Because the STA can perform only communication of a low-latency service in the restricted service period, when any one or more conditions in the first condition are met, the STA determines that the restricted service period ends, and ends the restricted service period in advance. In this way, waste of a remaining idle restricted service time after the low-latency service is completed can be avoided, thereby saving communication resources.

Based on the problem that the latency performance of the low-latency service of the STA is affected, an embodiment of this application provides a communication method, so that ongoing transmission of the low-latency service is not interrupted, thereby ensuring latency performance of the low-latency service of the STA. The communication method is specifically: The STA obtains a TXOP before a restricted service period arrives; and if a second condition is met, the STA skips ending the TXOP before the restricted service period arrives, where the second condition includes any one or more of the following: the TXOP is used to transmit a data frame of a first service; a transmission time for transmitting a service in the TXOP is less than or equal to a first threshold; and the restricted service period is a time period used for D2D transmission. Because the STA needs to end its TXOP before the restricted service period arrives, if any one or more of exception conditions (the second condition) are met, the STA may not need to end its transmit opportunity before the restricted service period arrives. In this way, ongoing transmission of the low-latency service is not interrupted, thereby ensuring latency performance of the low-latency service of the STA.

To better understand a communication method and apparatus, and a computer-readable storage medium provided in embodiments of this application, the following first describes a communication system to which embodiments of this application are applied.

It should be understood that, the technical solutions of embodiments of this application may be applied to various communication systems, such as: a Wi-Fi wireless communication system, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, other future evolved systems, or various other wireless communication system using a radio access technology.

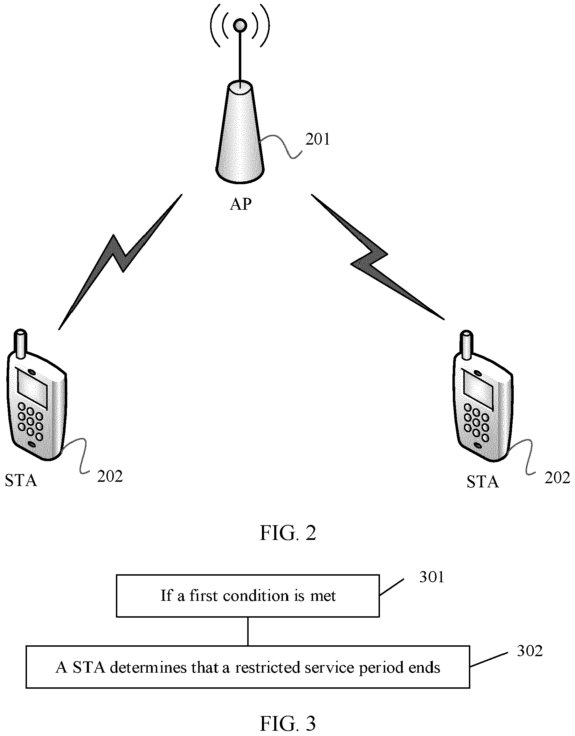

FIG. 2 is a schematic diagram of a communication system according to an embodiment of this application. As shown in FIG. 2, the communication system includes one network device and at least one terminal device located within coverage of the network device. The network device may provide communication coverage for a specific geographic area, and communicate with the terminal device located in the coverage area. The network device may be a base transceiver station (base transceiver station, BTS) in a GSM system or a code division multiple access (code division multiple access, CDMA) system, may be a NodeB (NodeB, NB) in a WCDMA system, may be an evolved NodeB (evolved NodeB, eNB, or eNodeB) in an LTE system, may be a radio controller in a cloud radio access network (cloud radio access network, CRAN), or may be a relay station, an access point AP, a vehicle-mounted device, a wearable device, a network side device in a future network, or the like. The terminal device may be mobile or fixed, and the terminal device may be a station STA, an access terminal, user equipment (user equipment, UE), a subscriber unit, a subscriber station, a mobile station, a mobile console, a remote station, a remote terminal, a mobile device, a user terminal, a wireless communication device, a user agent, a user apparatus, or the like.

It should be noted that the STA in this embodiment of this application is a STA supporting an R-TWT-SP. The STA may declare in advance whether the STA supports the R-TWT-SP. If the STA supports the R-TWT-SP, the STA needs to end ongoing communication of a non-low-latency service before the R-TWT-SP starts. If the STA does not support the R-TWT-SP, the STA may ignore the R-TWT-SP. Because the R-TWT-SP affects the communication of the non-low-latency service of the STA that supports this feature to some extent, the R-TWT-SP in this embodiment of this application can serve only the STA that supports the R-TWT-SP feature.

It should be understood that the communication system shown in FIG. 2 is merely an example for description, and does not constitute a limitation on the communication system.

FIG. 3 is a schematic flowchart of a communication method according to an embodiment of this application. The following uses a STA as an example to describe the method. However, it should be understood that the method is not limited to execution by the STA, and may also be executed by an AP. The STA described in this specification includes apparatuses/devices in various forms on a STA side, and the AP includes various apparatuses/devices in various forms on an AP side. As shown in FIG. 3, the communication method includes but is not limited to the following steps.

301: If a first condition is met,

302: The STA determines that a restricted service period ends.

The first condition includes one or more of the following conditions:
Condition (1): The STA receives a first frame indicating that the restricted service period ends.
Condition (2): The STA receives no second frame in a preset time period.
Condition (3): The STA receives a frame for non-low-latency service communication in a local cell.

The restricted service period is a period of time, and the AP and the STA are only used to serve the low-latency service in this period of time. Optionally, the restricted service period may be referred to as an R-SP (restricted service period, R-SP), or may be referred to as a restricted TWT SP (restricted TWT SP). It may be understood that the restricted service period may alternatively have another name. This is not limited in this embodiment of this application.

It may be understood that, to ensure that restricted service periods of a plurality of cells do not affect each other, the AP may send a parameter value of a restricted service period of the AP to another AP. When setting a parameter value of a restricted service period for the another AP, it needs to ensure that the restricted service periods of the plurality of APs does not overlap.

The following separately describes the first condition in detail. It should be understood that the first condition includes but is not limited to the foregoing three conditions.

For the condition (1):
The AP indicates that the restricted service period has ended, and sends, to the STA, the first frame indicating that the restricted service period ends. After receiving the first frame sent by the AP, the STA determines that the restricted service period ends.

Specifically, there are two cases in which the AP may indicate that the restricted service period has ended.

Case 1: When low-latency service communication in the restricted service period has ended, the AP may send, to the STA in the restricted service period, the first frame indicating that the restricted service period ends.

Case 2: If low-latency service communication does not exist in the current restricted service period, the AP may send, to the STA before the restricted service period arrives, the first frame indicating that the restricted service period ends.

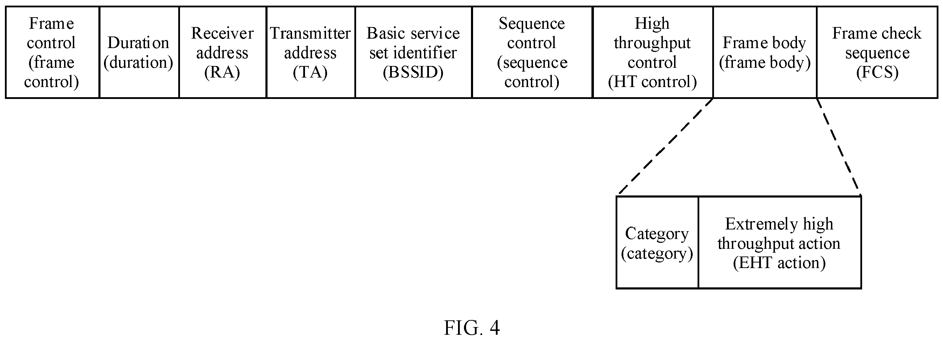

An implementation of the first frame is that the first frame may be an EHT action frame. FIG. 4 is a schematic diagram of a frame structure according to an embodiment of this application. As shown in FIG. 4, an EHT action frame may include a frame control (frame control) field, a duration (duration) field, a receiver address (Receiver address, RA) field, a transmitter address (sending address, TA) field, a basic service set identifier (BSS ID) field, a sequence control (sequence control) field, a high throughput control (HT control) field, a frame body (frame body) field, and a frame check sequence (frame check sequence, FCS) field. The frame body (frame body) field includes a category (category) subfield and an extremely high throughput action (EHT action) subfield. A value of the extremely high throughput action (EHT action) subfield indicates that the EHT action frame is used to terminate the current restricted service period. For example, when the value of the extremely high throughput action (EHT action) subfield is 0, it may indicate to terminate the current restricted service period, or when the value of the extremely high throughput action (EHT action) subfield is 1, it may indicate to terminate the current restricted service period. The value of the extremely high throughput action (EHT action) subfield may alternatively be a value such as 2 or 3. It indicates to terminate the current restricted service period. It may be understood that the value of the extremely high throughput action (EHT action) subfield is merely an example for description, and does not constitute a limitation thereto.

Another implementation of the first frame is that the first frame may be a contention free end (contention free end, CF-End) frame. If the STA receives the CF-end frame sent by the AP in the restricted service period, the STA determines that the restricted service period ends.

The first frame may be sent in a broadcast form.

For the condition (2):
After entering the restricted service period, if the STA receives no second frame in the preset time period, the STA determines that the restricted service period ends.

The preset time period may be sent by the AP to the STA, for example, carried in a TWT element or carried in an EHT operation element (EHT operation element) for sending. Specifically, the preset time period may be determined by a nominal minimum TWT wake duration (nominal minimum TWT wake duration) field and a wake duration unit (wake duration unit) field of the TWT element, or may be determined by a minimum restricted service period duration (minimum restricted service period duration) field in the EHT operation element. Alternatively, the preset time period may be specified in a standard. For example, the preset time period may be 1 ms (millisecond), 100 µs (microsecond), or the like. The preset time period is less than the restricted service period.

If the preset time period is sent by the AP to the STA, the STA may receive a third frame that is sent by the AP and that carries the TWT element or the EHT operation element. The third frame may be a beacon frame (beacon), or may be a TWT response frame.

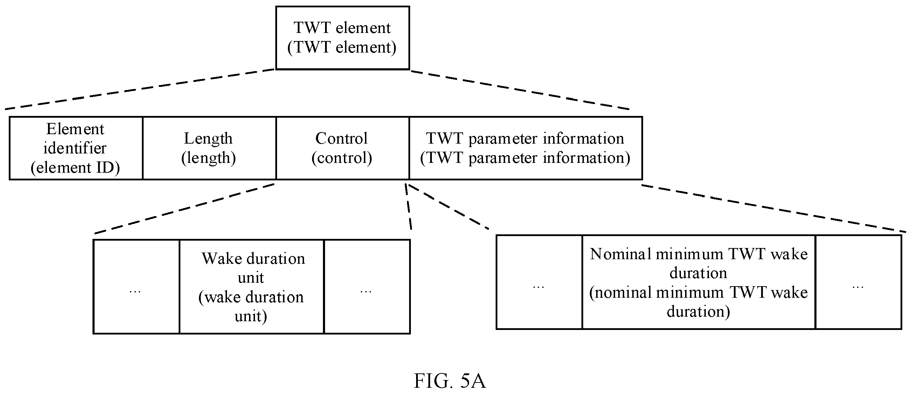

FIG. 5A is a schematic diagram of a frame structure of a TWT element according to an embodiment of this application. As shown in FIG. 5A, the TWT element may include an element identifier (element ID) field, a length (length) field, a control (control) field, and a TWT parameter information (TWT parameter information) field. The TWT parameter information (TWT parameter information) field may include a nominal minimum TWT wake duration (nominal minimum TWT wake duration) subfield. The control (control) field may include a wake duration unit (wake duration unit) subfield.

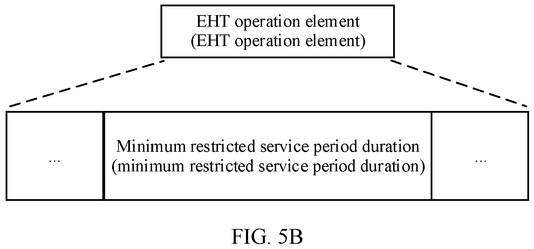

FIG. 5B is a schematic diagram of a frame structure of an EHT operation element according to an embodiment of this application. As shown in FIG. 5B, the EHT operation element may include a minimum restricted service period duration (minimum restricted service period duration) field. It may be understood that the field indicates a length of the preset time period, and may have another name. The name of the field is not limited.

The preset time period may be determined by the nominal minimum TWT wake duration (nominal minimum TWT wake duration) field and the wake duration unit (wake duration unit) field that are in the TWT element in FIG. 5A.

Specifically, after receiving the third frame, the STA may determine a length of the restricted service period based on the nominal minimum TWT wake duration (nominal minimum TWT wake duration) field and the wake duration unit (wake duration unit) field. For example, in the standard, when a value of the wake duration unit (wake duration unit) field is 0, it indicates that a unit is 256 µs (microsecond), and when the value of the wake duration unit (wake duration unit) field is 1, it indicates that the unit is 1024 µs (microsecond). Duration of the preset time period is obtained by multiplying a value indicated by the nominal minimum TWT wake duration (nominal minimum TWT wake duration) field by the time unit indicated by the wake duration unit field, and then by a first coefficient. The first coefficient may be a predefined value, for example, 0.1, 0.2, 0.5, 0.8, and 1. The first coefficient may be sent by the AP to the STA. Specifically, the first coefficient may be carried in the TWT element.

Alternatively, the preset time period may be determined by the minimum restricted service period duration (minimum restricted service period duration) field in the EHT operation element shown in FIG. 5B.

Specifically, after receiving the third frame, the STA may determine a length of the preset time period based on the minimum restricted service period duration (minimum restricted service period duration) field.

The second frame may be the frame for low-latency service communication in the local cell, or may be a frame sent by an AP in the local cell, or may be any frame.

The local cell may be understood as a BSS to which the STA belongs. The STA may obtain a value of a BSS color of the local cell in advance. The STA may determine, based on a physical layer frame header or a MAC layer frame header of the received frame, whether the received frame is the frame in the local cell. Specifically, a BSS color field in the physical layer frame header may be used for determining. If a value of a received BSS color field is the same as the value of the BSS color in the local cell, it is determined that the received frame is the frame in the local cell. A receiver address field or a transmitter address field in the MAC layer frame header may also be used for determining. If a value of the receiver address field or the transmitter address field is the same as a value of a MAC address of the AP in the local cell, it is determined that the received frame is the frame in the local cell.

The low-latency service may be a service whose access class of the service is higher than or equal to some specific access categories (threshold access categories of the low-latency service), or may be a service whose service identifiers are some specific identifiers (preset service identifiers of the low-latency service). It may be understood that the low-latency service may be a service whose priority corresponding to an access class of the service is higher than or equal to priorities corresponding to some specific access categories (threshold access categories of the low-latency service), or may be a service whose service identifiers are some specific identifiers (preset service identifiers of the low-latency service). The threshold access class of the low-latency service or the preset service identifier of the low-latency service may be sent by the AP to the STA, for example, carried in the TWT element or carried in the EHT operation element (EHT operation element) for sending. The threshold access class of the low-latency service or the preset service identifier of the low-latency service may also be specified in a standard. For example, AC = AC_VO or AC = AC_VI; or TID = 0 or 1. Optionally, the service identifier may be a specific service identifier name, or may be a specific value.

If the threshold access class of the low-latency service or the preset service identifier of the low-latency service is sent by the AP to the STA, the STA may receive a sixth frame that is sent by the AP and that carries the TWT element or the EHT operation element. The sixth frame may be a beacon frame (beacon), or may be a TWT response frame.

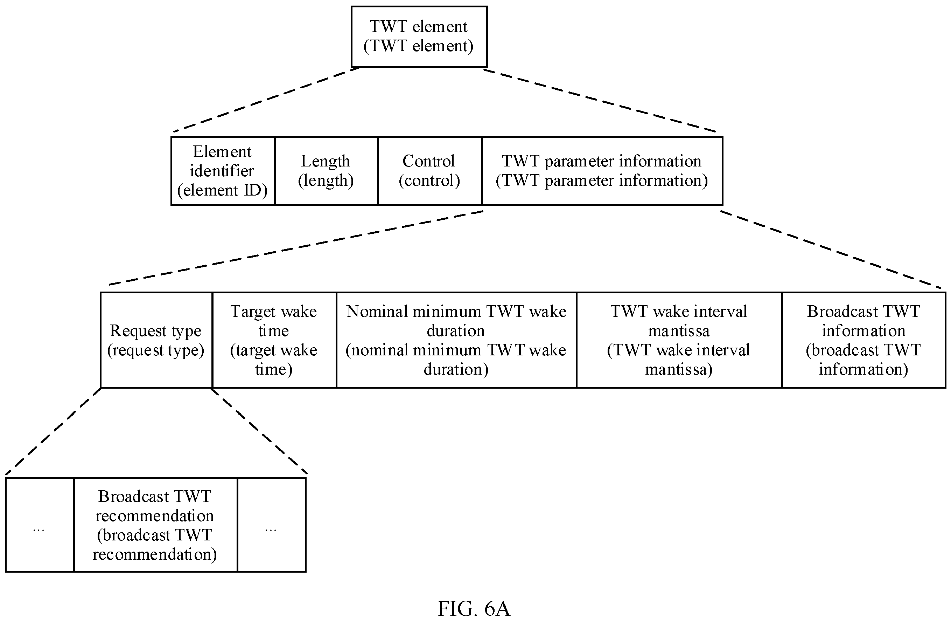

FIG. 6A is a schematic diagram of a frame structure of another TWT element according to an embodiment of this application. As shown in FIG. 6A, the TWT element may include an element identifier (element ID) field, a length (length) field, a control (control) field, and a TWT parameter information (TWT parameter information) field. The TWT parameter information (TWT parameter information) field may include a request type (request type) subfield, a target wake time (target wake time) subfield, a nominal minimum TWT wake duration (nominal minimum TWT wake duration) subfield, a TWT wake interval mantissa (TWT wake interval mantissa) subfield, and a broadcast TWT information (broadcast TWT Info) subfield. The request type (request type) subfield may include a broadcast TWT recommendation (broadcast TWT recommendation) subfield.

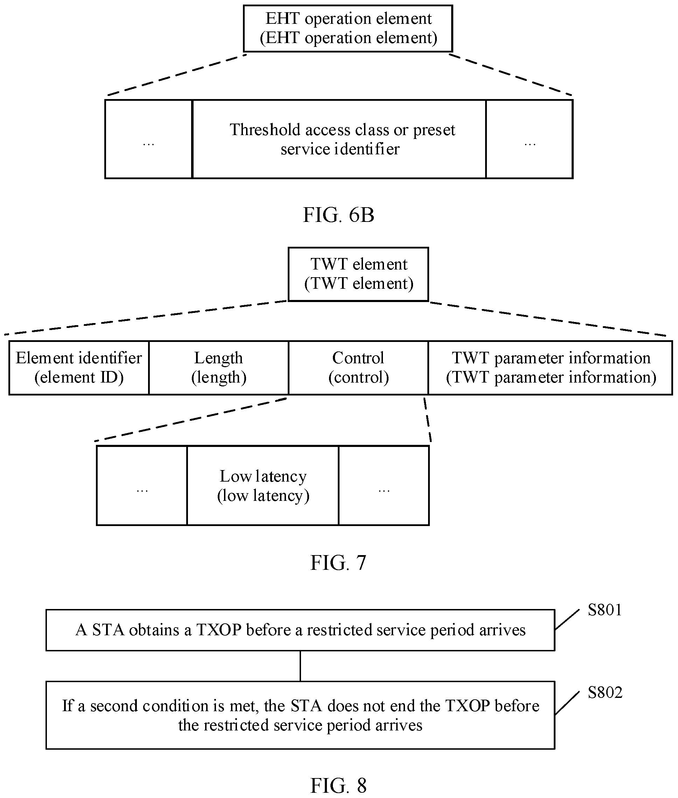

FIG. 6B is a schematic diagram of a frame structure of another EHT operation element according to an embodiment of this application. As shown in FIG. 6B, the EHT operation element may include a threshold access class or a preset service identifier field. It may be understood that the threshold access class or the preset service identifier field may indicate a threshold access class of a low-latency service or a preset service identifier field of a low-latency service, or may have another name. The name of the field is not limited.

The threshold access class of the low-latency service or the preset service identifier of the low-latency service may be determined by using the broadcast TWT recommendation (broadcast TWT recommendation) field in the TWT element shown in FIG. 6A or the threshold access class or the preset service identifier field in the EHT operation element shown in FIG. 6B. The following specifically describes an implementation in which the threshold access class of the low-latency service or the preset service identifier of the low-latency service may be determined by using the broadcast TWT recommendation (broadcast TWT recommendation) field in the TWT element shown in FIG. 6A.

In a possible implementation, the broadcast TWT recommendation (broadcast TWT recommendation) field may indicate the threshold access class of the low-latency service or the preset service identifier of the low-latency service by using an index. Specifically, a value of the broadcast TWT recommendation (broadcast TWT recommendation) field may indicate an index value, and the index value may correspond to the threshold access class of the low-latency service or the preset service identifier of the low-latency service. Specifically, the broadcast TWT recommendation (broadcast TWT recommendation) field indicates the threshold access class of the low-latency service or the preset service identifier of the low-latency service by using an index value.

A correspondence between the value of the broadcast TWT recommendation (broadcast TWT recommendation) field and the threshold access class of the low-latency service may be shown in the following Table 1.

**Table 1**

| Value of a broadcast TWT recommendation (broadcast TWT recommendation) field | Threshold access class of a low-latency service |
|---|---|
| First value | AC_VO |
| Second value | AC_VO and AC_VI |
| ... | ... |

In Table 1, when the value of the broadcast TWT recommendation (broadcast TWT recommendation) field is the first value, a threshold access class, of a low-latency service, corresponding to the first value is AC_VO. When the value of the broadcast TWT recommendation (broadcast TWT recommendation) field is the second value, a threshold access class, of a low-latency service, corresponding to the second value is AC_VO and AC_VI. It may be understood that the correspondence between the value of the broadcast TWT recommendation (broadcast TWT recommendation) field and the threshold access class of the low-latency service that is shown in Table 1 is merely an example. In actual application, the correspondence between the value of the broadcast TWT recommendation (broadcast TWT recommendation) field and the threshold access class of the low-latency service may be determined according to an actual application scenario. This is not limited in this embodiment of this application.

If the broadcast TWT recommendation (broadcast TWT recommendation) field, in the TWT element, received by the STA is an index value, the STA may determine, based on the index value, a threshold access class, of a low-latency service, corresponding to the index value. Then, whether the currently received service is the low-latency service is determined based on an access class of the service. For example, if the value of the broadcast TWT recommendation (broadcast TWT recommendation) field is the first value, the STA may determine whether the access class of the currently received service is AC_VO, and if yes, determine that the currently received service is the low-latency service. If the value of the broadcast TWT recommendation (broadcast TWT recommendation) field is the second value, the STA may determine whether the access class of the currently received service is AC_VO or AC_VI, and if yes, determine that the currently received service is the low-latency service. When the STA determines that the currently received service is not the low-latency service of the local cell, the condition (2) is met, and the STA determines that the restricted service period ends.

A correspondence between the value of the broadcast TWT recommendation (broadcast TWT recommendation) field and the preset service identifier of the low-latency service may be shown in the following Table 2.

**Table 2**

| Value of a broadcast TWT recommendation (broadcast TWT recommendation) field | Preset service identifier of a low-latency service |
|---|---|
| First value | 6 and 7 |
| Second value | 4, 5, 6, and 7 |
| Third value (for example, 3) | Values between the third value (for example, 3) and 7 |
| ... | ... |

In Table 2, when the value of the broadcast TWT recommendation (broadcast TWT recommendation) field is the first value, preset service identifiers, of the low-latency service, corresponding to the first value are 6 and 7. When the value of the broadcast TWT recommendation (broadcast TWT recommendation) field is the second value, preset service identifiers, of the low-latency service, corresponding to the second value are 4, 5, 6, and 7. When the value of the broadcast TWT recommendation (broadcast TWT recommendation) field is the third value (for example, 3), preset service identifiers, of the low-latency service, corresponding to the third value are the values between the third value (for example, 3) and 7. It may be understood that the correspondence between the value of the broadcast TWT recommendation (broadcast TWT recommendation) field and the preset service identifier of the low-latency service that is shown in Table 2 is merely an example. In actual application, the correspondence between the value of the broadcast TWT recommendation (broadcast TWT recommendation) field and the preset service identifier of the low-latency service may be determined according to an actual application scenario. This is not limited in this embodiment of this application.

If the broadcast TWT recommendation (broadcast TWT recommendation) field, in the TWT element, received by the STA is an index value, the STA may determine, based on the index value, a preset service identifier, of a low-latency service, corresponding to the index value. Then, whether the currently received service is the low-latency service is determined based on a service identifier of the service. For example, if the value of the broadcast TWT recommendation (broadcast TWT recommendation) field is the first value, the STA may determine whether the service identifier of the currently received service is 6 or 7, and if yes, determine that the currently received service is the low-latency service. For another example, if the value of the broadcast TWT recommendation (broadcast TWT recommendation) field is the second value, the STA may determine whether the service identifier of the currently received service is one of 4, 5, 6, or 7, and if yes, determine that the currently received service is the low-latency service. For another example, if the value of the broadcast TWT recommendation (broadcast TWT recommendation) field is the third value, the STA may determine whether the service identifier of the currently received service is one of the values between the third value (for example, 3) and 7, and if yes, determine that the currently received service is the low-latency service. When the STA determines that the currently received service is not the low-latency service of the local cell, the condition (2) is met, and the STA determines that the restricted service period ends.

In another possible implementation, the broadcast TWT recommendation (broadcast TWT recommendation) field may directly indicate the threshold access class of the low-latency service or the preset service identifier of the low-latency service. Specifically, when information in the broadcast TWT recommendation (broadcast TWT recommendation) field is AC _VO, it may indicate that AC_VO is the threshold access class of the low-latency service. When the information in the broadcast TWT recommendation (broadcast TWT recommendation) field is AC_VO and AC_VI, it may indicate that AC_VO and AC_VI are the threshold access categories of the low-latency service. Alternatively, when the information in the broadcast TWT recommendation (broadcast TWT recommendation) field is 6 and 7, it may indicate that 6 and 7 are the preset service identifiers of the low-latency service. When the information in the broadcast TWT recommendation (broadcast TWT recommendation) field is 4, 5, 6, and 7, it may indicate that 4, 5, 6, and 7 are the preset service identifiers of the low-latency service. When the information in the broadcast TWT recommendation (broadcast TWT recommendation) field is the third value (for example, 3), it may indicate that the values between the third value (for example, 3) and 7 are the preset service identifiers of the low-latency service.

If the information in the broadcast TWT recommendation (broadcast TWT recommendation) field, in the TWT element, received by the STA directly indicates the threshold access class of the low-latency service or the preset service identifier of the low-latency service, the STA may determine the threshold access class of the low-latency service or the preset service identifier of the low-latency service based on the information in the field. The access class or the service identifier of the currently received service and the information in the broadcast TWT recommendation (broadcast TWT recommendation) field are used to determine whether the currently received service is the low-latency service. When the STA determines that the currently received service is not the low-latency service of the local cell, the condition (2) is met, and the STA determines that the restricted service period ends.

It may be understood that the threshold access class of the low-latency service or the preset service identifier of the low-latency service may also be determined by using the threshold access class or the preset service identifier field in the EHT operation element shown in FIG. 6B. For a specific implementation, refer to a manner of determining the broadcast TWT recommendation (broadcast TWT recommendation) field in the foregoing TWT element. To avoid repetition, details are not described herein again.

Optionally, a new low-latency field may be added to the TWT element carried in the sixth frame, and the threshold access class of the low-latency service or the preset service identifier of the low-latency service is determined by using the low-latency field.

FIG. 7 is a schematic diagram of a frame structure of still another TWT element according to an embodiment of this application. As shown in FIG. 7, the TWT element may include an element identifier (element ID) field, a length (length) field, a control (control) field, and a TWT parameter information (TWT parameter information) field. The control (control) field may include a low latency (low latency) subfield.

A threshold access class of a low-latency service or a preset service identifier of a low-latency service may be determined by using the TWT element shown in FIG. 7.

In a possible implementation, the low latency (low latency) field may indicate the threshold access class of the low-latency service or the preset service identifier of the low-latency service by using an index. Specifically, a value of the low latency (low latency) field may indicate an index value, and the index value may correspond to the threshold access class of the low-latency service or the preset service identifier of the low-latency service. Specifically, the low latency (low latency) field indicates the threshold access class of the low-latency service or the preset service identifier of the low-latency service by using an index value.

A correspondence between the value of the low latency (low latency) field and the threshold access class of the low-latency service may be shown in the following Table 3.

**Table 3**

| Value of a low latency (low latency) field | Threshold access class of a low-latency service |
|---|---|
| First value | AC_VO |
| Second value | AC_VO and AC_VI |
| ... | ... |

In Table 3, when the value of the low latency (low latency) field is the first value, a threshold access class, of a low-latency service, corresponding to the first value is AC_VO. When the value of the low latency (low latency) field is the second value, a threshold access class, of a low-latency service, corresponding to the second value is AC_VO and AC_VI. It may be understood that the correspondence between the value of the low latency (low latency) field and the threshold access class of the low-latency service that is shown in Table 3 is merely an example. In actual application, the correspondence between the value of the low latency (low latency) field and the threshold access class of the low-latency service may be determined according to an actual application scenario. This is not limited in this embodiment of this application.

If the low latency (low latency) field, in the TWT element or the EHT operation element, received by the STA is an index value, the STA may determine, based on the index value, a threshold access class, of a low-latency service, corresponding to the index value. Then, whether the currently received service is the low-latency service is determined based on an access class of the service. For example, if the value of the low latency (low latency) field is the first value, the STA may determine whether the access class of the currently received service is AC VO, and if yes, determine that the currently received service is the low-latency service. If the value of the low latency (low latency) field is the second value, the STA may determine whether the access class of the currently received service is AC_VO or AC_VI, and if yes, determine that the currently received service is the low-latency service. When the STA determines that the currently received service is not the low-latency service of the local cell, the condition (2) is met, and the STA determines that the restricted service period ends.

A correspondence between the value of the low latency (low latency) field and the preset service identifier of the low-latency service may be shown in the following Table 4.

**Table 4**

| Value of a low latency (low latency) field | Preset service identifier of a low-latency service |
|---|---|
| First value | 6 and 7 |
| Second value | 4, 5, 6, and 7 |
| ... | ... |

In Table 4, when the value of the low latency (low latency) field is the first value, preset service identifiers, of the low-latency service, corresponding to the first value are 6 and 7. When the value of the low latency (low latency) field is the second value, preset service identifiers, of the low-latency service, corresponding to the second value are 4, 5, 6, and 7. It may be understood that the correspondence between the value of the low latency (low latency) field and the preset service identifier of the low-latency service that is shown in Table 4 is merely an example. In actual application, the correspondence between the value of the low latency (low latency) field and the preset service identifier of the low-latency service may be determined according to an actual application scenario. This is not limited in this embodiment of this application.

If the low latency (low latency) field, in the TWT element or the EHT operation element, received by the STA is an index value, the STA may determine, based on the index value, a preset service identifier, of a low-latency service, corresponding to the index value. Then, whether the currently received service is the low-latency service is determined based on a service identifier of the service. For example, if the value of the low latency (low latency) field is the first value, the STA may determine whether the service identifier of the currently received service is 6 or 7, and if yes, determine that the currently received service is the low-latency service. For another example, if the value of the low latency (low latency) field is the second value, the STA may determine whether the service identifier of the currently received service is one of 4, 5, 6, or 7, and if yes, determine that the currently received service is the low-latency service. When the STA determines that the currently received service is not the low-latency service of the local cell, the condition (2) is met, and the STA determines that the restricted service period ends.

In another possible implementation, the low latency (low latency) field may directly indicate the threshold access class of the low-latency service or the preset service identifier of the low-latency service. Specifically, when information in the low latency (low latency) field is AC_VO, it may indicate that AC_VO is the threshold access class of the low-latency service. When the information in the low latency (low latency) field is AC_VO and AC_VI, it may indicate that AC_VO and AC_VI are the threshold access categories of the low-latency service. Alternatively, when the information in the low latency (low latency) field is 6 and 7, it may indicate that 6 and 7 are the preset service identifiers of the low-latency service. When the information in the low latency (low latency) field is 4, 5, 6, and 7, it may indicate that 4, 5, 6, and 7 are the preset service identifiers of the low-latency service.

If the information in the low latency (low latency) field, in the TWT element or the EHT operation element, received by the STA directly indicates the threshold access class of the low-latency service or the preset service identifier of the low-latency service, the STA may determine the threshold access class of the low-latency service or the preset service identifier of the low-latency service based on the information in the field. The access class or the service identifier of the currently received service and the information in the low latency (low latency) field are used to determine whether the currently received service is the low-latency service. When the STA determines that the currently received service is not the low-latency service of the local cell, the condition (2) is met, and the STA determines that the restricted service period ends.

Optionally, a special value of the low-latency field may indicate that the established TWT is not used for low-latency communication, but is used for conventional TWT communication. Another value is used for the low-latency communication and indicates an access class or a service identifier corresponding to the low-latency communication. Values are shown in Table 5 below.

**Table 5**

| Value of a low latency (low latency) field | Meaning |
|---|---|
| 0 | Non-low latency |
| 1 | AC_VO |
| 2 | AC_VO and AC_VI |
| ... | ... |

It may be understood that the meaning of the value shown in Table 5 is merely an example. In actual application, the meaning of the value may be determined according to an actual application scenario. This is not limited in this embodiment of this application.

For the condition (3):
After entering the restricted service period, if the STA receives a frame of non-low-latency service (that is, a common service) communication in the local cell, the STA determines that the restricted service period ends.

The local cell may be understood as a BSS to which the STA belongs. The STA may obtain a value of a BSS color of the local cell in advance. The STA may determine, based on a physical layer frame header or a MAC layer frame header of the received frame, whether the received frame is the frame in the local cell. Specifically, a BSS color field in the physical layer frame header may be used for determining. If a value of a received BSS color field is the same as the value of the BSS color in the local cell, it is determined that the received frame is the frame in the local cell. A receiver address field or a transmitter address field in the MAC layer frame header may be used for determining. If a value of the receiver address field or the transmitter address field is the same as a MAC address of the AP in the local cell, it is determined that the received frame is the frame in the local cell.

The non-low-latency service may be a service whose access class of the service is lower than some specific access categories (threshold access categories of the non-low-latency service), or may be a service whose service identifiers are some specific identifiers (preset service identifiers of the non-low-latency service). It may be understood that the non-low-latency service may be a service whose priority corresponding to an access class of the service is lower than priorities corresponding to some specific access categories (threshold access categories of the non-low-latency service), or may be a service whose service identifiers are some specific identifiers (preset service identifiers of the non-low-latency service). The threshold access class of the non-low-latency service or the preset service identifier of the non-low-latency service may be sent by the AP to the STA, for example, carried in the TWT element or in the EHT operation element for sending. The threshold access class of the non-low-latency service or the preset service identifier of the non-low-latency service may also be specified in a standard. Optionally, the service identifier may be a specific service identifier name, or may be a specific value.

If the threshold access class of the non-low-latency service or the preset service identifier of the non-low-latency service is sent by the AP to the STA, the STA may receive a fourth frame that is sent by the AP and that carries the TWT element or the EHT operation element. The fourth frame may be a beacon frame (beacon), or may be a TWT response frame. A schematic diagram of a frame structure of the TWT element may be shown in FIG. 6A, and a schematic diagram of a frame structure of the EHT operation element may be shown in FIG. 6B. The broadcast TWT recommendation (broadcast TWT recommendation) field in the TWT element or the threshold access class or the preset service identifier field in the EHT operation element may indicate the threshold access class of the non-low-latency service or the preset service identifier of the non-low-latency service. For a specific implementation, refer to the implementation, in the foregoing condition (2), for indicating the threshold access class of the low-latency service or the preset service identifier of the non-low-latency service by using the broadcast TWT recommendation (broadcast TWT recommendation) field in the TWT element or the threshold access class or the preset service identifier field in the EHT operation element. To avoid repetition, details are not described herein again. If an access class or a service identifier of the current service received by the STA is the threshold access class of the low-latency service or the preset service identifier of the low-latency service indicated by the broadcast TWT recommendation (broadcast TWT recommendation) field, the STA may determine that the current service is the non-low-latency service. When the STA determines that the current service is the non-low-latency service of the local cell, that is, the condition (3) is met, the STA determines that the restricted service period ends.

Optionally, the STA may receive a sixth frame. Because a TWT element or an EHT operation element carried in the sixth frame indicates the threshold access class of the low-latency service or the preset service identifier of the low-latency service, when receiving the current service, the STA may determine whether the access class or the service identifier of the current service is the threshold access class of the low-latency service or the preset service identifier of the low-latency service. If not, the STA may determine that the current service is the non-low-latency service. When the STA determines that the current service is the non-low-latency service of the local cell, that is, the condition (3) is met, the STA determines that the restricted service period ends.

When the first condition includes the condition (2), the AP needs to send a third frame and a fourth frame to the STA, and the third frame and the fourth frame may be a same frame. A TWT element or an EHT operation element carried in the third frame or the fourth frame indicates both a preset time period and the threshold access class of the non-low-latency service or the preset service identifier of the low-latency service. Alternatively, the AP needs to send a third frame and a sixth frame to the STA, and the third frame and the sixth frame may be a same frame. A TWT element or an EHT operation element carried in the third frame or the sixth frame indicate both a preset time period and the threshold access class of the low-latency service or the preset service identifier of the low-latency service.

When the first condition includes the condition (3), the AP needs to send a fourth frame to the STA, and the third frame and the fourth frame are different frames. A TWT element or an EHT operation element carried in the third frame indicates a preset time period. A TWT element or an EHT operation element carried in the fourth frame indicates the threshold access class of the non-low-latency service or the preset service identifier of the low-latency service. Alternatively, the AP needs to send a sixth frame to the STA, and the third frame and the sixth frame are different frames. A TWT element or an EHT operation element carried in the third frame indicates a preset time period. A TWT element or an EHT operation element carried in the sixth frame indicates the threshold access class of the low-latency service or the preset service identifier of the low-latency service.

When the restricted service period arrives, an ongoing channel access process of the STA is suspended, and channel access in the restricted service period starts. When any one or more of the foregoing first conditions are met, the STA determines that the restricted service period ends. After determining that the restricted service period ends, the STA may initiate new channel access, or continue to perform channel access that is suspended before the restricted service period. The channel access may be a channel access process based on carrier sense multiple access/interference avoidance (carrier sense multiple access/collision avoidance, CSMA/CA) or enhanced distributed channel access (enhanced distributed channel access, EDCA).

It may be understood that, in a conventional channel access rule, after the STA receives a trigger frame sent by the AP and sends a data frame, if the STA subsequently performs channel access in the EDCA access manner, the STA needs to perform channel contention by using a multi-user (multi-user, MU) EDCA parameter set. This is because the STA has performed channel access in a manner of responding to the trigger frame, and a conservative parameter (namely, the MU EDCA parameter set) needs to be used in subsequent channel access. In this embodiment of this application, because the data frame sent by the STA after the STA receives the trigger frame in the restricted service period is a data frame of the low-latency service, a channel access opportunity of the low-latency service is not affected. After the STA receives, in the restricted service period, the trigger frame sent by the AP, and sends the data frame, if the STA needs to perform channel access in the EDCA access manner subsequently, the STA may perform channel access by using an original EDCA parameter set instead of using the MU EDCA parameter set.

It may be understood that, because the STA needs to end ongoing communication of the non-low-latency service of the STA before the restricted service period starts, if the STA completes random backoff before the restricted service period starts, but does not perform transmission before the restricted service period, after the restricted service period ends, if the station needs to perform channel access in the EDCA access manner subsequently, a used EDCA parameter is the same as an EDCA parameter used in the random backoff before the restricted service period starts.

FIG. 8 is a schematic flowchart of another communication method according to an embodiment of this application. The following uses a STA as an example to describe the method. However, it should be understood that the method is not limited to execution by the STA, and may also be executed by an AP. The STA described in this specification includes apparatuses/devices in various forms on a STA side, and the AP includes various apparatuses/devices in various forms on an AP side. As shown in FIG. 8, the communication method includes but is not limited to the following steps.

S801: The STA obtains a TXOP before a restricted service period arrives.

The STA may obtain the TXOP before the restricted service period arrives. Services transmitted by using the TXOP may include a low-latency service, a non-low-latency service, an exception service, and the like.

S802: If a second condition is met, the STA does not end the TXOP before the restricted service period arrives.

The second condition includes one or more of the following exception conditions:
Exception condition (1): The TXOP is used to transmit a data frame of a first service.
Exception condition (2): A transmission time for transmitting a service in the TXOP is less than or equal to a first threshold.
Exception condition (3): The restricted service period is a time period used for D2D transmission.

The restricted service period is a period of time, and the AP and the STA are only used to serve the low-latency service in this period of time. Optionally, the restricted service period may be referred to as an R-SP (restricted service period, R-SP), or may be referred to as a restricted TWT SP (restricted TWT SP). It may be understood that the restricted service period may alternatively have another name. This is not limited in this embodiment of this application.

The STA skips ending the TXOP before the restricted service period arrives, which may be understood as that the STA does not need to end its TXOP before the restricted service period arrives, that the STA does not end the TXOP before the restricted service period arrives, or that the STA continues the current service transmission when the restricted service period arrives.

It may be understood that, to ensure that restricted service periods of a plurality of cells do not affect each other, the AP may send a parameter value of a restricted service period of the AP to another AP. When setting a parameter value of a restricted service period for the another AP, it needs to ensure that the restricted service periods of the plurality of APs does not overlap.

The following separately describes the second condition in detail. It should be understood that the second condition includes but is not limited to the foregoing three exception conditions.

For the exception condition (1):
If the TXOP obtained by the STA before the restricted service period arrives is the data frame used to transmit the first service, the STA does not end the TXOP before the restricted service period arrives.

The first service may be a low-latency service, or may be an exception service.

When the first service is the low-latency service, specifically,
the low-latency service may be a service whose access class of the service is higher than or equal to some specific access categories (threshold access categories of the low-latency service), or may be a service whose service identifiers are some specific identifiers (preset service identifiers of the low-latency service). It may be understood that the low-latency service may be a service whose priority corresponding to an access class of the service is higher than or equal to priorities corresponding to some specific access categories (threshold access categories of the low-latency service), or may be a service whose service identifiers are some specific identifiers (preset service identifiers of the low-latency service). The threshold access class of the low-latency service or the preset service identifier of the low-latency service may be sent by the AP to the STA, for example, carried in a TWT element or in an EHT operation element for sending. The threshold access class of the low-latency service or the preset service identifier of the low-latency service may also be specified in a standard. For example, AC = AC_VO or AC = AC_VI; or TID = 0 or 1. Optionally, the service identifier may be a specific service identifier name, or may be a specific value.

If the threshold access class of the low-latency service or the preset service identifier of the low-latency service is sent by the AP to the STA, the STA may receive a sixth frame that is sent by the AP and that carries the TWT element or the EHT operation element. The sixth frame may be a beacon frame (beacon), or may be a TWT response frame.

The threshold access class of the low-latency service or the preset service identifier of the low-latency service may be determined by using the broadcast TWT recommendation (broadcast TWT recommendation) field in the TWT element shown in FIG. 6A or the threshold access class or the preset service identifier field in the EHT operation element shown in FIG. 6B. Alternatively, the threshold access class of the low-latency service or the preset service identifier of the low-latency service may be determined by the low-latency (low latency) field in the TWT element shown in FIG. 7. For a specific implementation, refer to the specific description in the foregoing condition (2). To avoid repetition, details are not described herein again. When the TXOP obtained by the STA before the restricted service period arrives is a data frame used to transmit the low-latency service, the exception condition (1) is met, and the STA does not end the TXOP before the restricted service period arrives.

When the first service is the exception service, specifically,
the exception service may be a same service as the low-latency service, or may be a service different from the low-latency service. If the exception service is the service different from the low-latency service, the exception service may be a service whose access class of the service is higher than or equal to a threshold access class of the exception service, or a service whose service identifier is a preset service identifier of the exception service. It may be understood that the exception service may be a service whose priority corresponding to an access class of the service is higher than or equal to a threshold access class of the exception service, or may be a service whose service identifier is a preset service identifier of the exception service. The threshold access class of the exception service or the preset service identifier of the exception service may be sent by the AP to the STA, for example, carried in a TWT element or in an EHT operation element for sending. The threshold access class of the exception service or the preset service identifier of the exception service may also be specified in a standard. Optionally, the service identifier may be a specific service identifier name, or may be a specific value.

If the threshold access class of the exception service or the preset service identifier of the exception service is sent by the AP to the STA, the STA may receive a seventh frame that is sent by the AP and that carries the TWT element or the EHT operation element. The seventh frame may be a beacon frame (beacon), or may be a TWT response frame.

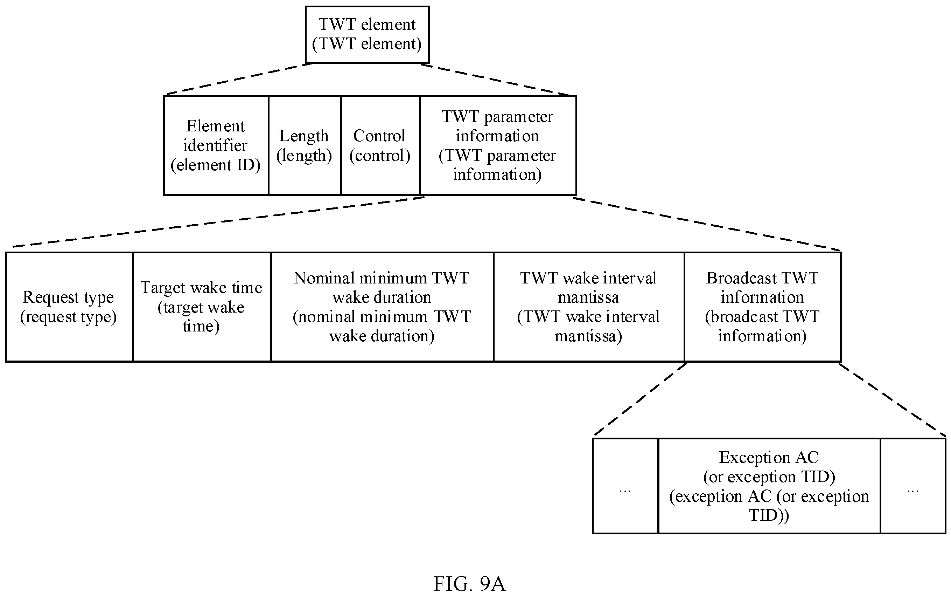

FIG. 9A is a schematic diagram of a frame structure of still another TWT element according to an embodiment of this application. As shown in FIG. 9A, the TWT element may include an element identifier (element ID) field, a length (length) field, a control (control) field, and a TWT parameter information (TWT parameter information) field. The TWT parameter information (TWT parameter information) field may include a request type (request type) subfield, a target wake time (target wake time) subfield, a nominal minimum TWT wake duration (nominal minimum TWT wake duration) subfield, a TWT wake interval mantissa (TWT wake interval mantissa) subfield, and a broadcast TWT information (broadcast TWT Info) subfield. The broadcast TWT information (broadcast TWT Info) subfield may include an exception access class (or an exception service identifier) (exception AC (or exception TID)) subfield.

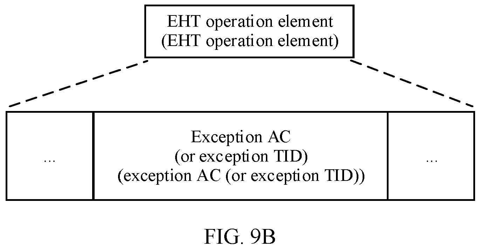

FIG. 9B is a schematic diagram of a frame structure of still another EHT operation element according to an embodiment of this application. As shown in FIG. 9B, the EHT operation element may include an exception access class (or an exception service identifier) (exception AC (or exception TID)) field.

A threshold access class of an exception service or a preset service identifier of an exception service may be determined by the exception access class (or the exception service identifier) (exception AC (or exception TID)) field in the TWT element shown in FIG. 9A or the EHT operation element shown in FIG. 9B.

When an access class corresponding to the data frame used to be transmitted by using the TXOP obtained by the STA before the restricted service period arrives is higher than or equal to the threshold access class of the exception service or the preset service of the exception service indicated by the exception access class (or exception service identifier) (exception AC (or exception TID)) field, that is, the exception condition (1) is met, the STA does not end its TXOP before the restricted service period arrives.

For the exception condition (2):
If the STA obtains the TXOP before the restricted service period arrives, and the transmission time for transmitting the service in the TXOP is less than or equal to the first threshold, the TA does not end the TXOP before the restricted service period arrives.

The first threshold may be sent by the AP to the STA, for example, carried in a TWT element or an EHT operation element. Alternatively, the first threshold may be specified in a standard. For example, the first threshold may be 1 ms (millisecond), 100 µs (microsecond), or the like.

If the preset time period is sent by the AP to the STA, the STA may receive a fifth frame that is sent by the AP and that carries the TWT element or the EHT operation element. The fifth frame may be a beacon frame (beacon), or may be a TWT response frame. A field in the TWT element or the EHT operation element may indicate the first threshold.

For the exception condition (3):
The restricted service period may be a time period for serving low-latency service communication between the AP and the STA, or may be a time period of service communication between D2Ds. D2D is service transmission between STAs, and D2D may also be referred to as a peer to peer (peer to peer). When the restricted service period is the time period used for D2D transmission, that is, the exception condition (3) is met, the STA does not end the TXOP before the restricted service period arrives.

When one or more exception conditions in the second condition are met, the STA may perform any one or more of the following actions:
Action 1: The STA can ignore the restricted service period. It may be understood that when the restricted service period arrives, the STA may not terminate transmission of the current TXOP of the STA until transmission of the TXOP is completed. Optionally, transmission of the TXOP may end after a start time of the restricted service period.
Action 2: When the restricted service period arrives, if the transmission time for transmitting the service in the TXOP is greater than a second threshold, the STA ends the TXOP. Specifically, when the restricted service period arrives, the STA may continue transmission only for a period of time, but cannot exceed the second threshold. The second threshold may be a value specified in a standard, or may be sent by the AP to the STA, for example, carried in the TWT element or the EHT operation element for sending.
   Optionally, the second threshold may be equal to the first threshold, that is, the STA ends the TXOP only after transmission of the current service of the TXOP is completed.
Action 3: When the restricted service period arrives, the STA continues to transmit at most one PPDU in the TXOP.

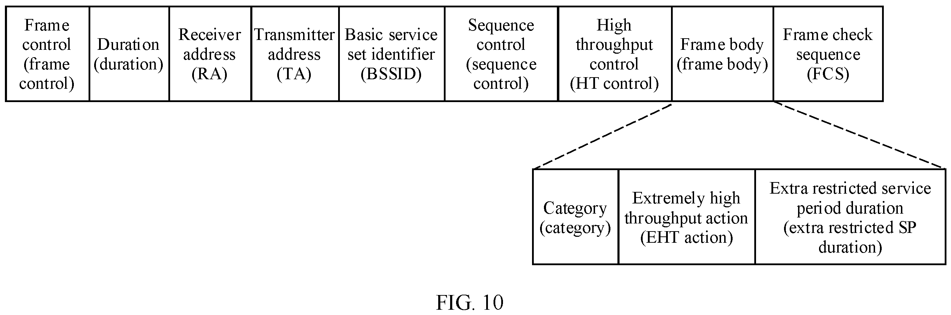

Optionally, when the second condition is met, because a part of the restricted service period is occupied by another node, the AP may send an eighth frame to the STA, and the eighth frame indicates to extend the restricted service period. The eighth frame may be one type of an EHT action frame. FIG. 10 is a schematic diagram of another frame structure according to an embodiment of this application. As shown in FIG. 10, an EHT action frame may include a frame control (frame control) field, a duration (duration) field, a receiver address (Receiver address, RA) field, a transmitter address (sending address, TA), field, a basic service set identifier (BSS ID) field, a sequence control (sequence control) field, a high throughput control (HT control) field, a frame body (frame body) field, and a frame check sequence (frame check sequence, FCS) field. The frame body (frame body) field includes a category (category) subfield, an extremely high throughput action (EHT action) subfield, and an extra restricted service period duration (extra restricted SP duration) subfield. A value of the extra restricted service period duration (extra restricted SP duration) subfield may indicate extended duration of the restricted service period. For example, when the value of the extra restricted service period duration (extra restricted SP duration) subfield is 10, it may indicate that the restricted service period is extended by 10 ms (millisecond).

The foregoing content describes in detail the methods provided in this application. To better implement the foregoing solutions in embodiments of this application, embodiments of this application further provide corresponding apparatuses.

In embodiments of this application, the communication apparatus may be divided into functional modules based on the foregoing method examples. For example, each functional module may be obtained through division based on each function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

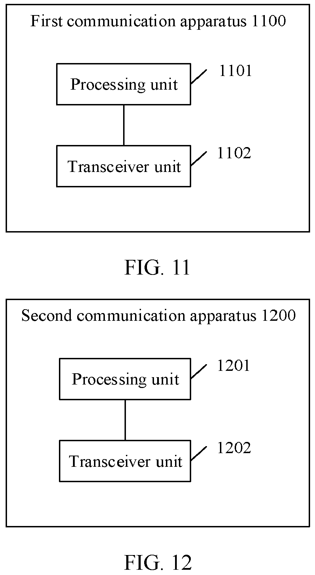

When an integrated unit is used, refer to FIG. 11. FIG. 11 is a schematic diagram of a structure of a first communication apparatus according to an embodiment of this application. The first communication apparatus may be a STA, or may be a module (for example, a chip) in the STA. As shown in FIG. 11, a first communication apparatus 1100 includes at least a processing unit 1101 and a transceiver unit 1102.

The processing unit 1101 is configured to: if a first condition is met, determine that a restricted service period ends, where the first condition includes any one or more of the following:
receiving a first frame, where the first frame indicates that the restricted service period ends;
receiving no second frame in a preset time period; and
receiving a frame for non-low-latency service communication in a local cell, where the local cell is a BSS to which the STA belongs.

In one embodiment, the first frame is an EHT action frame, and an EHT action field in the EHT action frame indicates that the restricted service period ends.

In an embodiment, the first communication apparatus 1100 further includes:
the transceiver unit 1102 is configured to: when the first condition includes receiving no second frame in the preset time period, receive a third frame before the STA determines that the restricted service period ends, where the third frame carries a TWT element; and the preset time period is determined by a nominal minimum TWT wake duration field and a wake duration unit field in the TWT element.

In an embodiment, the transceiver unit 1102 may be further configured to: when the first condition includes: receiving the frame for non-low-latency service communication in the local cell, receive a fourth frame before the STA determines that the restricted service period ends, where the fourth frame carries a TWT element.

The TWT element carries a threshold access class of a non-low-latency service or a preset service identifier of a non-low-latency service, and the non-low-latency service is a service whose access class of the service is lower than or equal to the threshold access class of the non-low-latency service; or the non-low-latency service is a service whose service identifier is the preset service identifier of the non-low-latency service.

In an embodiment, the threshold access class of the non-low-latency service or the preset service identifier of the non-low-latency service is determined by using a broadcast TWT recommendation field in the TWT element.

In an embodiment, the processing unit 1101 may be further configured to initiate new channel access after determining that the restricted service period ends, or continue to perform channel access that is suspended before the restricted service period.

For more detailed descriptions of the processing unit 1101 and the transceiver unit 1102, directly refer to related descriptions of the STAin the method embodiment shown in FIG. 3. Details are not described herein.

FIG. 12 is a schematic diagram of a structure of a second communication apparatus according to an embodiment of this application. The second communication apparatus may be a STA, or may be a module (for example, a chip) in the STA. As shown in FIG. 12, a second communication apparatus 1200 includes at least a processing unit 1201 and a transceiver unit 1202.

The processing unit 1201 is configured to obtain a TXOP before a restricted service period arrives.

The processing unit 1201 is further configured to: if a second condition is met, skip ending the TXOP before the restricted service period arrives, where the second condition includes any one or more of the following:
the TXOP is used to transmit a data frame of a first service;
a transmission time for transmitting a service in the TXOP is less than or equal to a first threshold; and
the restricted service period is a time period used for D2D transmission.

In an embodiment, the second communication apparatus 1200 further includes:
the transceiver unit 1202 is configured to: when the second condition includes that the transmission time for transmitting the service in the TXOP is less than or equal to the first threshold, before the skipping ending the TXOP before the restricted service period arrives, receive a fifth frame, where the fifth frame carries a TWT element, and the TWT element carries the first threshold.

In an embodiment, the first service is a low-latency service. The transceiver unit 1202 may be further configured to:
when the second condition includes that the TXOP is used to transmit the data frame of the first service, before the skipping ending the TXOP before the restricted service period arrives, receive a sixth frame, where the sixth frame carries a TWT element. The TWT element carries a threshold access class of a low-latency service or a preset service identifier of a low-latency service, and the low-latency service is a service whose access class of the service is higher than or equal to the threshold access class of the low-latency service; or the low-latency service is a service whose service identifier is the preset service identifier of the low-latency service.

In an embodiment, the threshold access class of the low-latency service or the preset service identifier of the low-latency service is determined by using a broadcast TWT recommendation field in the TWT element.

In an embodiment, the first service is an exception service. The transceiver unit 1202 is further configured to:
when the second condition includes that the TXOP is used to transmit the data frame of the first service, before the skipping ending the TXOP before the restricted service period arrives, receive a seventh frame, where the seventh frame carries a TWT element. The TWT element carries a threshold access class of the exception service or a preset service identifier of the exception service, and the exception service is a service whose access class of the service is higher than or equal to the threshold access class of the exception service; or the exception service is a service whose service identifier is the preset service identifier of the exception service.

In an embodiment, the threshold access class of the exception service or the preset service identifier of the exception service is determined by an exception access class field in the TWT element.

In an embodiment, the processing unit 1201 may be further configured to:
when the restricted service period arrives, when the transmission time for transmitting the service in the TXOP is greater than a second threshold, end the TXOP.

In an embodiment, the processing unit 1201 may be further configured to:
when the restricted service period arrives, at most one PPDU continues to be transmitted in the TXOP.

In an embodiment, the transceiver unit 1202 may be further configured to:
receive an eighth frame, where the eighth frame indicates to extend the restricted service period.

For more detailed descriptions of the processing unit 1201 and the transceiver unit 1202, directly refer to related descriptions of the STAin the method embodiment shown in FIG. 8. Details are not described herein.

The foregoing describes the first communication apparatus and the second communication apparatus in embodiments of this application. The following describes possible product forms of the first communication apparatus and the second communication apparatus. It should be understood that any form of product having the features of the first communication apparatus in FIG. 11 and any form of product having the features of the second communication apparatus in FIG. 12 fall in the protection scope of this application. It should be further understood that the following description is merely an example, and a product form of the first communication apparatus and a product form of the second communication apparatus in embodiments of this application are not limited thereto.

In a possible product form, the first communication apparatus and the second communication apparatus in embodiments of this application may be implemented by using a general bus architecture.

The first communication apparatus includes a processor. Optionally, the first communication apparatus further includes a transceiver that communicates with the processor. The processor is configured to: if a first condition is met, determine that a restricted service period ends, where the first condition includes any one or more of the following: receiving a first frame, where the first frame indicates that the restricted service period ends; receiving no second frame in a preset time period; and receiving a frame for non-low-latency service communication in a local cell, where the local cell is a BSS to which the STA belongs. Optionally, the first communication apparatus may further include a memory. The memory is configured to store instructions to be executed by the processor.

The second communication apparatus includes a processor. Optionally, the second communication apparatus further includes a transceiver that communicates with the processor. The processor is configured to obtain a TXOP before a restricted service period arrives; and the processing unit is further configured to: if a second condition is met, skip ending the TXOP before the restricted service period arrives, where the second condition includes any one or more of the following: the TXOP is used to transmit a data frame of a first service; a transmission time for transmitting a service in the TXOP is less than or equal to a first threshold; and the restricted service period is a time period used for D2D transmission. Optionally, the second communication apparatus may further include a memory. The memory is configured to store instructions to be executed by the processor.

In a possible product form, the first communication apparatus and the second communication apparatus in embodiments of this application may be implemented by using a chip.

A chip implementing the first communication apparatus includes a processing circuit. Optionally, the chip further includes an output interface for internal communication with the processing circuit. The processing circuit is configured to: if a first condition is met, determine that a restricted service period ends, where the first condition includes any one or more of the following: receiving a first frame, where the first frame indicates that the restricted service period ends; receiving no second frame in a preset time period; and receiving a frame for non-low-latency service communication in a local cell, where the local cell is a BSS to which the STA belongs. Optionally, the chip may further include a storage medium, and the storage medium is configured to store instructions executed by the processing circuit.

A chip implementing the second communication apparatus includes a processing circuit. Optionally, the chip further includes an output interface for internal communication with the processing circuit. The processing circuit is configured to obtain a TXOP before a restricted service period arrives; and the processing circuit is further configured to: if a second condition is met, skip ending the TXOP before the restricted service period arrives, where the second condition includes any one or more of the following: the TXOP is used to transmit a data frame of a first service; a transmission time for transmitting a service in the TXOP is less than or equal to a first threshold; and the restricted service period is a time period used for D2D transmission. Optionally, the second communication apparatus may further include a memory. The memory is configured to store instructions to be executed by the processor. Optionally, the chip may further include a storage medium, and the storage medium is configured to store instructions executed by the processing circuit.

Alternatively, as a possible product form, the first communication apparatus and the second communication apparatus described in this embodiment of this application may further be implemented by using the following components: one or more FPGAs (field programmable gate arrays), a PLD (programmable logic device), a controller, a state machine, gate logic, a discrete hardware component, any other suitable circuit, or any combination of circuits that can perform various functions described in this application.

It should be understood that the first communication apparatus and the second communication apparatus in the foregoing product forms have any function of the first communication apparatus and the second communication apparatus in the foregoing method embodiment, and details are not described herein again.

An embodiment of this application further provides a computer-readable storage medium. The computer-readable storage medium stores instructions. When the instructions are run on a computer, the computer is enabled to perform the method according to any one of the foregoing embodiments.

An embodiment of this application further provides a computer program product. When the computer program product is run on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the interface circuit, to enable the apparatus to perform the method in any one of the foregoing embodiments.

Method or algorithm steps described in combination with the content disclosed in this application may be implemented by hardware, or may be implemented by a processor by executing software instructions. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that facilitates transmission of a computer program from one place to another. The storage medium may be any available medium accessible to a general-purpose or a dedicated computer.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, comprising:
if a first condition is met, determining, by a station STA, that a restricted service period ends, wherein the first condition comprises any one or more of the following:
receiving a first frame, wherein the first frame indicates that the restricted service period ends;
receiving no second frame in a preset time period; and
receiving a frame for non-low-latency service communication in a local cell, wherein the local cell is a basic service set BSS to which the STA belongs.

2. The method according to claim 1, wherein the first frame is an extremely high throughput EHT action frame, and an EHT action field in the EHT action frame indicates that the restricted service period ends.

3. The method according to claim 1 or 2, wherein when the first condition comprises:
receiving no second frame in the preset time period, before the determining, by a STA, that a restricted service period ends, the method further comprises:
receiving, by the STA, a third frame, wherein the third frame carries a target wake time TWT element; and
the preset time period is determined by a nominal minimum TWT wake duration field and a wake duration unit field in the TWT element.

4. The method according to claim 1, wherein when the first condition comprises: receiving the frame for non-low-latency service communication in the local cell, before the determining, by a STA, that a restricted service period ends, the method further comprises:
receiving, by the STA, a fourth frame, wherein the fourth frame carries a target wake time TWT element; and
the TWT element carries a threshold access class of a non-low-latency service or a preset service identifier of a non-low-latency service, and the non-low-latency service is a service whose access class of the service is lower than or equal to the threshold access class of the non-low-latency service; or the non-low-latency service is a service whose service identifier is the preset service identifier of the non-low-latency service.

5. The method according to claim 4, wherein the threshold access class of the non-low-latency service or the preset service identifier of the non-low-latency service is determined by using a broadcast TWT recommendation field in the TWT element.

6. The method according to any one of claims 1 to 5, wherein the method further comprises:
initiating, by the STA, new channel access after determining that the restricted service period ends, or continuing to perform channel access that is suspended before the restricted service period.

7. A first communication apparatus, wherein the apparatus is applied to a station STA and comprises:
a processing unit, configured to: if a first condition is met, determine that a restricted service period ends, wherein the first condition comprises any one or more of the following:
receiving a first frame, wherein the first frame indicates that the restricted service period ends;
receiving no second frame in a preset time period; and
receiving a frame for non-low-latency service communication in a local cell, wherein the local cell is a basic service set BSS to which the STA belongs.

8. The apparatus according to claim 7, wherein the first frame is an extremely high throughput EHT action frame, and an EHT action field in the EHT action frame indicates that the restricted service period ends.

9. The apparatus according to claim 7 or 8, wherein the apparatus further comprises:
a transceiver unit, configured to: when the first condition comprises receiving no second frame in the preset time period, receive a third frame before the STA determines that the restricted service period ends, wherein the third frame carries a target wake time TWT element; and
the preset time period is determined by a nominal minimum TWT wake duration field and a wake duration unit field in the TWT element.

10. The apparatus according to claim 1, wherein the transceiver unit is further configured to:
when the first condition comprises receiving the frame for non-low-latency service communication in the local cell, receive a fourth frame before the STA determines that the restricted service period ends, wherein the fourth frame carries a target wake time TWT element; and
the TWT element carries a threshold access class of a non-low-latency service or a preset service identifier of a non-low-latency service, and the non-low-latency service is a service whose access class of the service is lower than or equal to the threshold access class of the non-low-latency service; or the non-low-latency service is a service whose service identifier is the preset service identifier of the non-low-latency service.

11. The apparatus according to claim 10, wherein the threshold access class of the non-low-latency service or the preset service identifier of the non-low-latency service is determined by using a broadcast TWT recommendation field in the TWT element.

12. The apparatus according to any one of claims 7 to 11, wherein the processing unit is further configured to:
initiate new channel access after determining that the restricted service period ends, or continue to perform channel access that is suspended before the restricted service period.

13. A first communication apparatus, comprising a processor, wherein the processor is configured to: if a first condition is met, determine that a restricted service period ends, wherein the first condition comprises any one or more of the following:
receiving a first frame, wherein the first frame indicates that the restricted service period ends;
receiving no second frame in a preset time period; and
receiving a frame for non-low-latency service communication in a local cell, wherein the local cell is a basic service set BSS to which the STA belongs.

14. A first communication apparatus, comprising a processing circuit, wherein the processing circuit is configured to: if a first condition is met, determine that a restricted service period ends, wherein the first condition comprises any one or more of the following:
receiving a first frame, wherein the first frame indicates that the restricted service period ends;
receiving no second frame in a preset time period; and
receiving a frame for non-low-latency service communication in a local cell, wherein the local cell is a basic service set BSS to which the STA belongs.

15. A computer-readable storage medium, wherein the computer-readable storage medium stores program instructions, and when the program instructions are run on a computer, the computer is enabled to perform the method according to any one of claims 1 to 6.

16. A computer program product comprising program instructions, wherein when the program instructions are run on a computer, the computer is enabled to perform the method according to any one of claims 1 to 6.
